(19) Europäisches Patentamt

European Patent Office

Office européen des brevets

(11) **EP 0 800 856 B1**

(12) **EUROPÄISCHE PATENTSCHRIFT**

(45) Veröffentlichungstag und Bekanntmachung des Hinweises auf die Patenterteilung:
**30.07.2003  Patentblatt 2003/31**

(51) Int Cl.⁷: **B01D 53/94**, B01J 29/12, B01J 29/06, B01J 21/12

(21) Anmeldenummer: **97105697.3**

(22) Anmeldetag: **07.04.1997**

(54) **Katalysator zur Reinigung der Abgase von Dieselmotoren**

Catalyst for treating exhaust gases from diesel engines

Catalysateur pour traitement d'effluents de moteur diesel

(84) Benannte Vertragsstaaten:
**DE ES FR GB IT NL SE**

(30) Priorität: **12.04.1996  DE 19614540**

(43) Veröffentlichungstag der Anmeldung:
**15.10.1997   Patentblatt 1997/42**

(73) Patentinhaber: **OMG AG & Co. KG**
**63457 Hanau (DE)**

(72) Erfinder:
• **Leyrer, Jürgen, Dr.**
 **63796 Kahl/Main (DE)**
• **Lindner, Dieter, Dr.**
 **63457 Hanau (DE)**
• **Lox, Egbert, Dr.**
 **63457 Hanau (DE)**
• **Kreuzer, Thomas P., Dr.**
 **61184 Karben (DE)**
• **Müller, Wilfried**
 **63075 Offenbach (DE)**
• **Domesle, Rainer, Dr.**
 **63755 Alzenau/Ufr. (DE)**

(74) Vertreter: **Stellbrink, Axel et al**
**Vossius & Partner**
**Siebertstrasse 4**
**81675 München (DE)**

(56) Entgegenhaltungen:
EP-A- 0 559 021          EP-A- 0 582 971
EP-A- 0 706 817          EP-A- 0 716 877
DE-A- 4 239 875

## Beschreibung

Die vorliegende Erfindung betrifft einen Katalysator zur Reinigung der Abgase von Dieselmotoren, welcher ein oder mehrere Zeolithe sowie mindestens ein Platingruppenmetall enthält.

Das Abgas von Dieselmotoren weist Kohlenmonoxid, unverbrannte Kohlenwasserstoffe, Stickoxide und Rußpartikel als Luftschadstoffe auf. Die unverbrannten Kohlenwasserstoffe umfassen Paraffine, Olefine, Aldehyde und Aromaten. Im Vergleich zu den Abgasen von Benzinmotoren weisen Dieselabgase einen wesentlich höheren Anteil an schwer oxidierbaren, langkettigen Paraffinen auf. Darüber hinaus sind Dieselabgase wesentlich kälter als Abgase von Benzinmotoren und enthalten Sauerstoff in einer Konzentration zwischen 3 und 10 Vol.-%.

Die hohe Sauerstoffkonzentration beruht auf der Tatsache, daß Dieselmotoren mit einem großen Luft/Kraftstoffverhältnis (Kilogramm Luft/Kilogramm Kraftstoff) von über 18 betrieben werden. Benzinmotoren arbeiten dagegen bei einem Luft/Kraftstoffverhältnis von 14,6, welches eine stöchiometrische Verbrennung der Kohlenwasserstoffe ermöglicht. Das Abgas von Benzinmotoren ist daher im wesentlichen sauerstofffrei.

Im Teillastbetrieb liegt die Abgastemperatur eines Dieselmotors im Bereich zwischen 100 und 250°C und erreicht nur im Vollastbetrieb eine Maximaltemperatur zwischen 550 und 650°C. Dagegen liegt die Abgastemperatur eines Benzinmotors im Teillastbetrieb zwischen 400 und 450°C und kann bei Vollast bis auf 1000°C ansteigen.

Die Rußpartikel des Dieselabgases bestehen aus Kohlenstoffkeimen und darauf adsorbierten flüchtigen organischen Komponenten (VOC = volatile organic compounds) sowie adsorbierten Sulfaten, die sich bei der Verbrennung im Dieselmotor aufgrund des Schwefelgehaltes des Dieselkraftstoffes bilden.

Wegen der besonderen Eigenschaften des Dieselabgases wurden für seine Reinigung maßgeschneiderte Abgasreinigungssysteme entwickelt.

Die DE 39 40 758 A1 beschreibt einen Katalysator zur oxidativen Reinigung der Abgase von Dieselmotoren mit hohen Umsetzungsraten für Kohlenwasserstoffe und Kohlenmonoxid bei niedrigen Temperaturen und gehemmter Oxidationswirkung gegenüber Stickoxiden und Schwefeldioxid. Die Aktivkomponente des Katalysators besteht aus mit Vanadium oder mit einer oxidischen Vanadiumverbindung in Berührung stehendem Platin, Palladium, Rhodium und/oder Iridium. Die Aktivkomponente ist auf feinteiligem Aluminiumoxid, Titanoxid, Siliziumoxid, Zeolith sowie deren Abmischungen abgeschieden. Der Katalysator ist in Form einer Beschichtung auf den frei durchströmbaren Kanälen eines wabenförmigen Tragkörpers aus Keramik oder Metall aufgebracht. Die Anspringtemperaturen $T_{50\%}$ dieses Katalysators für Kohlenmonoxid und Kohlenwasserstoffe liegen im Bereich zwischen 210 und 275°C (Bei den Anspringtemperaturen $T_{50\%}$ handelt es sich um die Temperaturen des Abgases, bei denen ein Katalysator gerade 50 % der Schadstoffe zu unschädlichen Komponenten umsetzt). Bei 350°C zeigt der Katalysator gute Umsetzungsraten für Kohlenmonoxid und Kohlenwasserstoffe. Der Katalysator läßt Stickoxide nahezu unbeeinflußt passieren. Schwefeldioxid wird nur im geringen Maße zu Schwefeltrioxid oxidiert. Wegen der verminderten Oxidationswirkung gegenüber Schwefeldioxid führt dieser Katalysator auch zu einer geringeren Partikelemission als bei anderen Oxidationskatalysatoren, da weniger Sulfate im Abgas zur Verfügung stehen, die auf den Rußkeimen adsorbiert werden können.

Die Problematik der Partikelemission wird im Zuge der geplanten Einführung von schwefelarmen Dieselkraftstoffen gemildert, so daß der Katalysator der DE 39 40 758 A1 an Bedeutung verlieren wird.

Die EP 0 427 970 A2 beschreibt einen Katalysator zur Verminderung der Stickoxide in einem oxidierenden Abgas mit einem Luft/Kraftstoffverhältnis von 22. Der Katalysator enthält wenigstens einen Zeolithen mit einem Molverhältnis $SiO_2/Al_2O_3$ von größer als 10 und Porendurchmessern von 0,5 bis 1 nm. Auf den Zeolithen sind Platingruppenmetalle abgeschieden, wobei für jedes Platingruppenmetall ein minimales Gewichtsverhältnis des Metalls zum Zeolithen nicht unterschritten werden darf, wenn auch noch nach Alterung des Katalysators gute Umsetzungsraten für Stickoxide erhalten werden sollen.

Die DE 44 35 073 A1 beschreibt einen Katalysator, der eine Mischung von wenigstens zwei Zeolithen mit unterschiedlichen Porendurchmessern sowie mit Palladium beladenes Ceroxid enthält. Die Mischung der Zeolithe dient zur Adsorption der unterschiedlich großen Kohlenwasserstoffmoleküle des Abgases während der Kaltstartphase. Palladium und Ceroxid werden verwendet, um die adsorbierten Kohlenwasserstoffe in unschädliche Komponenten zu überführen.

Die EP 0 559 021 A2 beschreibt einen Katalysator für die Stickoxidverminderung im mageren Abgas von Kraftfahrzeugmotoren. Der Katalysator enthält auf einem Tragkörper eine erste katalytische Beschichtung aus einem hochoberflächigen Aluminiumoxid und/oder Ceroxid imprägniert mit einer Mischung aus Iridium und Platin als katalytisch aktive Edelmetallkomponente. Auf der ersten Schicht ist eine zweite katalytische Beschichtung aus einem Zeolithen aufgebracht, der Kupfer und/oder Eisen enthält und vom Mordenit-Typ ist.

Die EP 0 706 817 A2 beschreibt ein Verfahren zur gleichzeitigen Verminderung der im Abgas einer Verbrennungskraftmaschine enthaltenen Kohlenwasserstoffe, Kohlenmonoxid und Stickoxide. Unter anderem wird die Verwendung eines Katalysators beschrieben, der ein Aluminiumsilikat und einen mit Kupfer ausgetauschten Zeolithen enthält, wobei auf dem Aluminiumsilikat Platin durch Sorption von Hexachloroplatinsäure abgeschieden wurde.

Die DE 42 39 875 A1 offenbart ein Abgasreinigungssystem zur Verminderung der Kohlenwasserstoff-Emissionen während des Kaltstarts von Verbrennungskraftmaschinen. Das Abgasreinigungssystem enthält einen Kohlenwasserstoff-Adsorber und ein nachgeschaltetes Katalysatorsystem. Der Kohlenwasserstoff-Adsorber enthält wenigstens einen hydrophoben, temperatur- und säurestabilen Zeolithen mit einem Si/Al-Verhältnis von größer als 20.

Die EP 0 582 971 A1 beschreibt ein Verfahren zur katalytischen Autoabgasreinigung mit verbesserter Kohlenwasserstoffunterdrückung während der Kaltstartphase bei Verwendung eines Drei-Wege-Katalysators und eines im Abgasstrom vor diesem Katalysator angeordneten Kohlenwasserstoffadsorbers, wobei der Kohlenwasserstoff-Adsorber eine größere spezifische Wärmekapazität aufweist als der nachgeschaltete Drei-Wege-Katalysator. Der Kohlenwasserstoff-Adsorber kann eine Mischung von Zeolithen mit einer Mischung aus Aluminiumoxid, Ceroxid und Zirkonoxid enthalten, die in einem separaten Imprägnierschritt mit Edelmetallen vorbelegt wird.

Aufgabe der vorliegenden Erfindung ist es, einen gegenüber dem Stand der Technik verbesserten Katalysator für die Reinigung der Abgase von Dieselmotoren anzugeben, der in der Lage ist, insbesondere die langkettigen, schwer oxidierbaren Paraffine im Abgas bei Temperaturen unter 200°C zu oxidieren und gleichzeitig die Stickoxide trotz des hohen Sauerstoffgehaltes des Dieselabgases zu reduzieren.

Diese Aufgabe wird durch einen Katalysator zur Reinigung der Abgase von Dieselmotoren gelöst, welcher aus einem oder mehreren Zeolithen sowie zusätzlich einem oder mehreren Metalloxiden und mindestens einem Platingruppenmetall besteht. Der Katalysator ist dadurch gekennzeichnet, daß die Zeolithe in der $Na^+$- oder $H^+$-Form vorliegen und mit den zusätzlichen Metalloxiden im Katalysator vermischt sind und daß die zusätzlichen Metalloxide ausgewählt sind aus der Gruppe Aluminiumsilikat, Aluminiumoxid und Titanoxid, wobei das Aluminiumsilikat ein Gewichtsverhältnis Siliziumdioxid/Aluminiumoxid von 0,005 bis 1 aufweist und die Platingruppenmetalle nur auf diesen zusätzlichen Metalloxiden abgeschieden sind.

Erfindungsgemäß besteht der Katalysator neben den Zeolithen aus weiteren Metalloxiden aus der Gruppe Aluminiumsilikat, Aluminiumoxid und Titanoxid, die als Träger für die Platingruppenmetalle dienen. Wesentlich ist, daß die Platingruppenmetalle nur auf diesen zusätzlichen Metalloxiden abgeschieden werden und nicht auf den Zeolithen. Die Abscheidung der Platingruppenmetalle auf den Zeolithen führt zu weniger aktiven Katalysatoren (siehe Vergleichsbeispiel V1).

Die Abscheidung der Platingruppenmetalle auf den zusätzlichen Metalloxiden (im folgenden auch als Aktivierung der Metalloxide bezeichnet) kann auf verschiedene Art und Weise erfolgen. Wichtig ist, daß das gewählte Abscheideverfahren eine möglichst gleichmäßige und fein verteilte Abscheidung der Platingruppenmetalle auf den zusätzlichen Metalloxiden gewährleistet.

Ein mögliches Abscheideverfahren ist das Imprägnieren der zusätzlichen Metalloxide vor dem Vermischen mit den Zeolithen mit einer Lösung von löslichen Vorstufen der Platingruppenmetalle. Bevorzugt werden hierfür wäßrige Lösungen verwendet.

Als Vorstufen für die Platingruppenmetalle sind alle gebräuchlichen Salze und Komplexsalze derselben geeignet. Beispiele für solche Verbindungen sind Hexachloroplatinsäure, Tetrachloroplatinsäure, Diammindinitroplatin (II), Tetraamminplatin(II)-chlorid, Ammoniumtetrachloroplatinat(II), Ammoniumhexachloroplatinat(IV), Platinethylendiamindichlorid, Tetraamminplatin(II)-Nitrat, Tetraämminplatin(II)-Hydroxid, Methylethanolamin-Platin(II)-hydroxid, Platinnitrat, Palladiumchlorid, Palladiumnitrat, Diammindinitropalladium(II), Tetraamminpalladium(II)-Hydroxid und Hexachloroiridiumsäure.

Zur Imprägnierung der zusätzlichen Metalloxide werden diese mit einer wäßrigen Lösung des oder der Platingruppenmetalle unter ständigem Rühren in Kontakt gebracht, so daß ein feuchtes Pulver entsteht. Das Lösungsmittelvolumen wird hierbei so bemessen, daß es etwa 100 bis 130, bevorzugt 110 %, des Wasseraufnahmevermögens des zu imprägnierenden Metalloxidpulvers entspricht. Nach einer Trocknung von etwa 1 bis 3 Stunden bei erhöhter Temperatur von 80 bis 140°C wird das entstandene Pulver für 1 bis 4 Stunden bei 200 bis 500, bevorzugt 300°C, in Luft calciniert und anschließend in einem wasserstoffhaltigen Gasstrom, bevorzugt Formiergas aus 95 Vol.-% Stickstoff und 5 Vol.-% Wasserstoff, reduziert. Dabei werden Temperaturen im Bereich zwischen 300 und 600, insbesondere 500°C, angewendet. Die Reduktion ist nach etwa 1 bis 3 Stunden abgeschlossen. Elektronenmikroskopische Untersuchungen zeigen, daß die auf der spezifischen Oberfläche der Metalloxide abgeschiedenen Platingruppenmetalle fein verteilt mit Partikelgrößen zwischen 10 und 50 nm vorliegen.

Mit dieser Vorgehensweise können die zusätzlichen Metalloxide mit einem Gehalt von 0,01 bis 5 Gew.-% Platingruppenmetall bezogen auf das Gesamtgewicht der imprägnierten Metalloxide belegt werden. Zwecks Unterdrückung der Oxidation von Schwefeldioxid zu Schwefeltrioxid können die zusätzlichen Metalloxide gleichzeitig mit den Platingruppenmetallen oder in beliebiger Reihenfolge mit diesen mit Vanadium belegt werden. Darüber hinaus können weitere Unedelmetalle wie Nickel und Kupfer zur Beeinflussung der katalytischen Aktivität der Platingruppenmetalle auf den zusätzlichen Metalloxiden abgeschieden werden. Hierzu werden lösliche Vorläuferverbindungen dieser Metalle verwendet.

Die zusätzlichen Metalloxide dienen als Trägermaterial für die katalytisch aktiven Platingruppenmetalle. Besonders geeignet sind daher solche Metalloxide, die eine hohe spezifische Oberfläche von mehr als 10 $m^2$/g aufweisen. Im Falle von Aluminiumoxid handelt es sich um sogenannte aktive Aluminiumoxide. Sie weisen die Kristallstrukturen der Übergangsreihe der kristallographischen Phasen des Aluminiumoxids auf, welche durchlaufen werden, wenn Aluminiumoxid-Hydroxide, wie zum Beispiel Gibbsit oder Boehmit, bis auf über 1000°C calciniert werden. Im einzelnen handelt es sich um Chi-, Eta-, Gamma-, Kappa-, Delta- und Theta-Aluminiumoxid. Ihre spezifischen Oberflächen können mehrere hundert Quadratmeter pro Gramm betragen. Diese Materialien können zur Stabilisierung ihrer spezifischen Oberfläche gegenüber hohen Temperaturen mit zum Beispiel Seltenerdoxiden dotiert sein.

Als Titanoxid eignen sich Materialien, die auf naßchemischem Wege (Sulfat- oder Chloridprozeß) oder durch Flammenhydrolyse von Titantetrachlorid hergestellt wurden. Die naßchemisch hergestellten Titanoxide weisen überwiegend die Kristallstruktur des Anatas auf und haben spezifische Oberflächen von gewöhnlich mehr als 50 $m^2/g$. Flammenhydrolytisch hergestellte Titanoxide weisen eine Mischstruktur aus etwa 70 % Anatas und 30 % Rutil auf. Die spezifische Oberfläche dieser sogenannten pyrogenen Titanoxide beträgt etwa 50 $m^2/g$.

Von den zusätzlichen Metalloxiden wird bevorzugt das Aluminiumsilikat als Trägermaterial für die Platingruppenmetalle verwendet. Es handelt sich hierbei um ein spezielles Aluminiumsilikat, welches ein Gewichtsverhältnis Siliziumdioxid/Aluminiumoxid zwischen 0,005 und 1 und eine sehr homogene Verteilung des Aluminiumoxids und Siliziumdioxids aufweist. Die Kristallstruktur dieses Aluminiumsilikats ist im Gegensatz zu der der Zeolithe böhmitisch und wird mit steigendem Siliziumdioxidgehalt amorph. Die spezifische Oberfläche dieses Aluminiumsilikats beträgt abhängig vom Siliziumdioxidgehalt 200 bis 500 $m^2/g$ und zeigt eine ausgezeichnete Oberflächenstabilität gegenüber den Betriebsbedingungen bei der Dieselabgasreinigung. Tabelle 1 belegt diese Eigenschaften. Sie zeigt in der oberen Hälfte für verschiedene Zusammensetzungen des Aluminiumsilikats die spezifische Oberfläche (BET-Oberfläche nach Brunauer, Emmett und Teller gemäß DIN 66131) im Frischzustand und nach einer forcierten Alterung (7-stündige Lagerung bei 900°C in einem synthetischen Abgas aus 10 Vol.-% Kohlendioxid, 6 Vol.-% Sauerstoff, 10 Vol.-% Wasserdampf, Rest Stickstoff).

Durch die vorstehend beschriebene Imprägnierung des Aluminiumsilikats mit den Platingruppenmetallen wird bei vorgegebener Beladung des Aluminiumsilikats (zum Beispiel 1,5 Gew.-% Pt bezogen auf das Gesamtgewicht von Aluminiumsilikat und Platin) eine bestimmte Konzentration der Metallpartikel pro Quadratmeter spezifischer Oberfläche des Aluminiumsilikats erhalten. Die Partikelkonzentration kann bei gleicher Beladung durch Verringerung der spezifischen Oberfläche des Aluminiumsilikats erhöht werden.

Es hat sich gezeigt, daß die Anspringtemperaturen des Katalysators für die Umsetzung von Kohlenmonoxid durch eine Erhöhung der Partikelkonzentration positiv beeinflußt werden.

Um bei gleicher Zusammensetzung des Aluminiumsilikats seine spezifische Oberfläche zu verringern, kann es einer Kalzination bei 1000°C mit unterschiedlicher Dauer unterworfen werden. In der unteren Hälfte von Tabelle 1 sind drei auf diese Weise behandelten Materialien aufgeführt. Durch die Kalzination können also Aluminiumsilikate einer gegebenen Zusammensetzung mit unterschiedlichen spezifischen Oberflächen hergestellt werden. Für die Zwecke der vorliegenden Erfindung werden bevorzugt Materialien mit spezifischen Oberflächen größer als 100 $m^2/g$ eingesetzt.

Als Maß für die Partikelkonzentration auf der spezifischen Oberfläche des Aluminiumsilikats ist in der letzten Spalte von Tabelle 1 die Platinkonzentration in mg Pt pro Quadratmeter spezifischer Oberfläche (im Frischzustand) für den Fall einer Beladung des Aluminiumsilikats mit 1 Gew.-% Platin berechnet. Man erkennt, daß bei vorgegebener Zusammensetzung des Aluminiumsilikats (z.B. 95 $Al_2O_3$/5 $SiO_2$) und vorgegebener Platinbeladung (z.B. 1 Gew.-%) die Platinkonzentration auf der spezifischen Oberfläche und damit die Partikelkonzentration durch Variation der spezifischen Oberfläche beeinflußt werden kann.

Tabelle 1:

| Oberflächenstabilität des Aluminiumsilikats | | | | | |
|---|---|---|---|---|---|
| $Al_2O_3$-Gehalt | $SiO_2$-Gehalt | Gewichtsverhältnis | Spezif. Oberfläche [$m^2/g$] | | mg Pt $m^2$ |
| [Gew.-%] | [Gew.-%] | $SiO_2/Al_2O_3$ | frisch | gealtert | |
| 98,5 | 1,5 | 0,015 | 200 | 159 | 0,05 |
| 95 | 5 | 0,053 | 286 | 235 | 0,035 |
| 90 | 10 | 0,111 | 333 | 224 | 0,03 |
| 80 | 20 | 0,250 | 374 | 265 | 0,027 |
| 70 | 30 | 0,429 | 407 | 270 | 0,025 |
| 60 | 40 | 0,667 | 432 | 271 | 0,023 |
| 95 | 5 | 0,053 | 212 | 175 | 0,047 |
| 95 | 5 | 0,053 | 153 | 137 | 0,065 |
| 95 | 10 | 0,111 | 163 | 138 | 0,061 |

Bevorzugt wird für den erfindungsgemäßen Katalysator ein Aluminiumsilikat mit einem Gewichtsverhältnis Siliziumdioxid/Aluminiumoxid von unter 0,5, insbesondere unter 0,25 eingesetzt.

Diese Aluminiumsilikate können gegebenenfalls homogen eingebrachte, hochtemperaturstabile Oxide bildende Elemente enthalten. Geeignete Elemente stellen zum Beispiel die Seltenen Erden wie Lanthan und Cer sowie Zirkon und die Erdalkalimetalle dar, die in Form geeigneter Vorläuferverbindungen eingebracht werden. Bevorzugt sind Gehalte an diesen Elementen bis 10 Gew.-% berechnet als Oxid. Ungünstig haben sich höhere Alkalimetallgehalte wie zum Beispiel von Natrium erwiesen. Gut geeignete Aluminiumsilikate weisen einen Gehalt an Natrium, berechnet als Oxid, von weniger als 75 ppm auf.

Die benötigte homogene Verteilung zwischen Aluminiumoxid und Siliziumdioxid kann nicht durch übliche Verfahren zur Stabilisierung von Aluminiumoxid erhalten werden. Auch physikalische Mischungen aus Aluminiumoxid und Siliziumdioxid sind für den erfindungsgemäßen Katalysator ungeeignet.

Ein besonders geeignetes Aluminiumsilikat wird in der DE 38 39 580 C1 beschrieben. Gemäß dieser Patentschrift wird das Aluminiumsilikat durch Vermischen einer Aluminiumverbindung mit einer Kieselsäureverbindung in wäßrigem Milieu, Trocknen sowie gegebenenfalls Calcinieren des Produktes erhalten. Als Aluminiumverbindung wird ein $C_2$ - $C_{20}$ Aluminiumalkoholat verwendet, das mit über Ionenaustauschern gereinigtem Wasser hydrolysiert wird. Dem Hydrolysewasser werden 0,1 - 5,0 Gew.-% einer über Ionenaustauscher gereinigten Orthokieselsäurelösung zugesetzt. Alternativ kann dem durch neutrale Hydrolyse gewonnenen Tonerde/Wasser-Gemisch eine 0,1 - 5,0 Gew.-%ige über Ionenaustauscher gereinigte Orthokieselsäure zugesetzt werden. Dieses besonders geeignete Aluminiumsilikat kann Zusätze von Lanthanoxid oder auch andere Seltenerdoxide enthalten.

Die im erfindungsgemäßen Katalysator zu verwendenden Zeolithe müssen ein Modul größer als 10 aufweisen, um ausreichend stabil gegenüber den sauren Komponenten des Abgases und den maximalen Abgastemperaturen zu sein.

Geeignete Zeolithe sind zum Beispiel ZSM5, Mordenit und dealuminierter Y-Zeolith (DAY). Sie werden in der Na$^+$- oder H$^+$-Form eingesetzt werden.

Zeolithe können durch die allgemeine Formel

$$M_{2/n} O \cdot Al_2O_3 \ x \ SiO_2 \cdot y \ H_2O$$

mit $x \geq 2$ beschrieben werden (Donald W. Breck: "Zeolithe Molecular Sieves", John Wiley & Sons, 1974). M bezeichnet darin ein Kation mit der Wertigkeit n wie zum Beispiel H$^+$ (n = 1), Na$^+$ (n = 1) oder Ca$^{2+}$ (n = 2). x ist das sogenannte Modul des Zeolithen und gibt das Molverhältnis Siliziumdioxid/Aluminiumoxid an. Unter Berücksichtigung der Molgewichte weisen Zeolithe also ein Gewichtsverhältnis Siliziumdioxid/Aluminiumoxid von größer als 1,18 auf. Bevorzugt werden für die erfindungsgemäßen Katalysatoren Zeolithe mit einem Modul größer als 10, d. h. mit einem Gewichtsverhältnis Siliziumdioxid/Aluminiumoxid größer als 5,9 eingesetzt. Ein solches Verhältnis sichert eine ausreichende Stabilität der charakteristischen Kristallstruktur der Zeolithe gegenüber den Temperaturen der Dieselabgase und der in ihnen enthaltenen sauren Schadstoffanteile.

In einer besonders vorteilhaften Ausgestaltung der Erfindung wird ein Zeolithgemisch aus wenigstens zwei Zeolithen verwendet, von denen einer einen Modul kleiner als 50 und der zweite einen Modul größer als 200 aufweist. Es hat sich gezeigt, daß ein möglichst breites Spektrum der Module der verwendeten Zeolithe sich vorteilhaft auf die Umsetzungsraten für die Schadstoffe auswirkt. Durch eine dealuminierende Behandlung ist es möglich, Zeolithe eines Strukturtyps mit einem breiten Spektrum an Modulen herzustellen. Der Modul eines stöchiometrisch zusammengesetzten ZSM5-Zeolithen hat zum Beispiel einen Wert von 5. Durch Dealuminierung können Modulwerte bis größer als 1000 eingestellt werden. Ähnlich verhält es sich mit dem Y-Zeolithen und Mordenit. Tabelle 2 listet die Eigenschaften einiger für den erfindungsgemäßen Katalysator geeigneter Zeolithe auf.

Tabelle 2

| Eigenschaften einiger Zeolithe | | | | |
|---|---|---|---|---|
| Zeolith | Modul | spez. Oberfläche [m$^2$/g] | Porendurchmesser [nm] | Porenvolumen [ml/g] |
| H-Mordenit | 20 | 565 | 0,4-0,5/0,8-0,9[∗) | 1,76 |
| H-ZSM5 | 40 | 360 | 0,5-0,6 | 2,09 |
| H-ZSM5 | 120 | 415 | 0,5-0,6 | 0,6 |
| DAY | 200 | 755 | 0,74 | 1,03 |
| Na-ZSM5 | > 1000 | 770 | 0,5-0,6 | 1,61 |

∗) bimodale Poren

Bevorzugt wird in dem erfindungsgemäßen Katalysator eine Mischung aus den 5 in Tabelle 2 angegebenen Zeolithen eingesetzt. Das Gewichtsverhältnis der Zeolithe zueinander kann in weiten Grenzen variieren. Vorwiegend wird jedoch eine Mischung mit gleichen Gewichtsanteilen aller Zeolithe verwendet.

In einer weiteren vorteilhaften Ausgestaltung der Erfindung wird ein mit Platin aktiviertes Aluminiumsilikat mit einem Zeolithgemisch aus einem dealuminierten Y-Zeolithen und einem Na-ZSM5-Zeolithen kombiniert, deren Module größer als 120 sind. Bevorzugt werden die beiden Zeolithe DAY und Na-ZSM5 aus Tabelle 2 mit Modulen von 200 bzw. > 1000 verwendet. Eine besonders niedrige Anspringtemperatur für die Umsetzung von Kohlenmonoxid wird erhalten, wenn ein Aluminiumsilikat mit einer spezifischen Oberfläche zwischen 100 und 200 $m^2$/g eingesetzt wird, welches eine Platin-Beladung zwischen 0,05 und 0,2 mg Pt/$m^2$ aufweist. Besonders geeignet hierfür ist ein Aluminiumsilikat mit einem $SiO_2$-Gehalt von etwa 5 Gew.-% und einer spezifischen Oberfläche zwischen 140 und 170 $m^2$/g. Die niedrige Anspringtemperatur dieses Katalysators ist besonders für moderne, direkt einspritzende Dieselmotoren wichtig, deren Abgastemperatur bei Teillast im Bereich zwischen 100 und 150°C liegt. In diesem Temperaturbereich bedeutet eine geringe Verminderung der Anspringtemperatur eine deutliche Verbesserung der Schadstoffumsetzung.

Zur Herstellung des erfindungsgemäßen Katalysators wird die Zeolithmischung mit den katalytisch aktivierten zusätzlichen Metalloxiden vermischt. Dabei kommen Gewichtsverhältnisse Metalloxide/Zeolithmischung von 10 : 1 bis 1 : 3, bevorzugt von 6 : 1 bis 2 : 1, zur Anwendung.

Die Zeolithmischung im Katalysator hat vorwiegend die Aufgabe, die Kohlenwasserstoffe des Abgases bei niedrigen Abgastemperaturen vorübergehend zu speichern, um sie bei Betriebszuständen des Dieselmotors mit höheren Abgastemperaturen wieder abzugeben. Bei diesen höheren Abgastemperaturen können die desorbierten Kohlenwasserstoffe von den katalytisch aktivierten, zusätzlichen Metalloxiden teilweise zu Kohlenmonoxid und Wasser oxidiert werden. Die nicht oxidierten Anteile der Kohlenwasserstoffe dienen neben Kohlenmonoxid als Reduktionsmittel für die katalytische Reduktion der im Abgas enthaltenen Stickoxide.

Das optimale Gewichtsverhältnis der zusätzlichen Metalloxide zur Zeolithmischung hängt von der mittleren Kohlenwasserstoffkonzentration im Abgas ab und ist damit auch von der Art des Dieselmotors abhängig. Oberhalb eines Gewichtsverhältnisses von 10 : 1 kann jedoch in keinem Fall mehr eine ausreichende Speicherung der Kohlenwasserstoffe gewährleistet werden. Wird dagegen das Gewichtsverhältnis Metalloxide/Zeolithmischung kleiner als 1 : 3, so ist die katalytische Aktivität des Katalysators nicht mehr ausreichend. Für direkt einspritzende und indirekt einspritzende Dieselmotoren haben sich Gewichtsverhältnisse zwischen 6 : 1 und 2 : 1 bewährt.

Die resultierende Katalysatormischung kann unter Zusatz geeigneter Hilfsstoffe wie anorganischen Bindern (z.B. Silicasol), Porenbildnern, Plastifizieren und Befeuchtungsmittel in bekannter Weise zu Formkörpern wie Tabletten und Extrudaten verarbeitet werden. Bevorzugt wird der Katalysator jedoch in Form einer Beschichtung auf den Innenwandungen der Strömungskanäle von Honigwabenkörpern aufgebracht.

Für die Abgasreinigung von Dieselmotoren sind Beschichtungsmengen von 50 bis 400 g/l Volumen des Wabenkörpers erforderlich. Die Zusammensetzung des Katalysators sollte dabei so abgestimmt werden, daß die katalytisch aktiven Komponenten auf den zusätzlichen Metalloxiden in einer Konzentration von 0,01 bis 5 g/l Volumen des Wabenkörpers vorliegen.

Die notwendigen Beschichtungstechniken sind dem Fachmann bekannt. So wird zum Beispiel die Katalysatormischung aus aktivierten Metalloxiden und der Zeolithmischung zu einer wäßrigen Beschichtungsdispersion verarbeitet. Dieser Dispersion kann als Binder zum Beispiel Silicasol zugegeben werden. Die Viskosität der Dispersion kann durch geeignete Zusatzstoffe eingestellt werden, so daß es möglich wird, die benötigte Beschichtungsmenge in einem einzigen Arbeitsgang auf die Wandungen der Strömungskanäle aufzubringen. Ist dies nicht möglich, so kann die. Beschichtung mehrfach wiederholt werden, wobei die frisch aufgebrachte Beschichtung jeweils durch eine Zwischentrocknung fixiert wird. Die fertige Beschichtung wird dann bei erhöhter Temperatur getrocknet und für die Dauer von 1 bis 4 Stunden bei Temperaturen zwischen 300 und 600°C an Luft calciniert.

Die Erfindung wird nun anhand einiger Beispiele und Vergleichsbeispiele aus dem Stand der Technik näher erläutert.

## Vergleichsbeispiel V1

Gemäß EP 0 427 970 A2 wurde ein Vergleichskatalysator hergestellt. Hierzu wurde eine Beschichtungsdispersion mit einem Feststoffanteil von 30 Gew.-% angefertigt. Die Dispersion enthielt bezogen auf die Trockenmasse 80 Gew.-% Zeolithpulver (H-Mordenit, x = 25 und 20 Gew.-%.Silica-Sol). Anschließend wurde ein Wabenkörper durch Eintauchen in die Beschichtungsdispersion mit den Oxiden beschichtet und danach bei 100°C an Luft getrocknet. Nach einer 1,5-stündigen Temperung bei 300°C wurde der beschichtete Wabenkörper für 3 Stunden bei 500°C kalziniert. Der beschichtete Wabenkörper wurde anschließend mit einer wäßrigen Lösung von Tetraamminplatin(II)-hydroxid imprägniert, bei 150°C an Luft getrocknet und bei 250°C kalziniert. Der fertige Katalysator enthielt pro Liter Wabenkörpervolumen 120 g Oxid und 1,77 g Platin.

Der offenzellige Wabenkörper bestand aus Cordierit mit 2,5 cm Durchmesser, 7,6 cm Länge, 62 Zellen be-

ziehungsweise Strömungskanälen pro cm$^2$ und einer Wandstärke der Strömungskanäle von 0,2 mm.

**Vergleichsbeispiel V2**

Nach DE 39 40 758 A1, Beispiel 18, wurde ein Vergleichskatalysator wie folgt hergestellt. Es wurde eine wäßrige Beschichtungsdispersion mit einem Feststoffanteil von 40% angefertigt. Die Dispersion enthielt bezogen auf die Trockenmasse 60 Gew.-% γ-Aluminiumoxid (180m$^2$/g spezifische Oberfläche) und 40 Gew.-% Titandioxid (50 m$^2$/g spezifische Oberfläche). Anschließend wurde ein Wabenkörper durch Eintauchen in die Beschichtungsdispersion mit den Metalloxiden beschichtet und danach bei 120°C an Luft getrocknet. Nach einer 2-stündigen Kalzinierung bei 400°C wurde der beschichtete Wabenkörper mit einer wäßrigen Lösung von Tetraamminplatin(II)-hydroxid imprägniert, bei 150°C an Luft getrocknet und bei 300°C kalziniert. Danach erfolgte eine Imprägnierung mit Vanadiumoxalat. Die Trocknung erfolgte bei 120°C an Luft, die Vanadiumzersetzung bei 500°C an Luft. Die so gewonnene Katalysatorvorstufe wurde für die Dauer von 2 Stunden bei 500°C im Formiergasstrom (95% N$_2$, 5% H$_2$) reduziert. Der fertige Katalysator enthielt pro Liter Wabenkörpervolumen 64 g Titandioxid, 96 g Aluminiumoxid, 5 g Vanadinoxid und 1,77 g Platin.

**Vergleichsbeispiel V3**

Analog zur DE 39 40 758 A1 wurde ein Vergleichskatalysator wie folgt hergestellt. Es wurde eine wäßrige Beschichtungsdispersion mit einem Feststoffanteil von 40% angefertigt. Die Dispersion enthielt bezogen auf die Trockenmasse 95 Gew.-% γ-Aluminiumoxid (180m$^2$/g spezifische Oberfläche) und 5 Gew.-% Siliziumdioxid (100 m$^2$/g spezifische Oberfläche). Anschließend wurde ein Wabenkörper durch Eintauchen in die Beschichtungsdispersion mit den Metalloxiden beschichtet und danach bei 120°C an Luft getrocknet. Nach einer 2-stündigen Kalzinierung bei 400°C wurde der beschichtete Wabenkörper mit einer wäßrigen Lösung von Hexachloroplatinsäure imprägniert, bei 150°C an Luft getrocknet und bei 300°C kalziniert. Die so gewonnene Katalysatorvorstufe wurde für die Dauer von 2 Stunden bei 500°C im Formiergasstrom (95% N$_2$, 5% H$_2$) reduziert. Der fertige Katalysator enthielt pro Liter Wabenkörpervolumen 200 g Oxid und 1,77 g Platin.

**Vergleichsbeispiel V4**

Nach DE 44 35 073 A1, Beispiel 13, wurde ein Vergleichskatalysator wie folgt angefertigt. Zuerst wurde Cerdioxid mit einer spezifischen Oberfläche von 105 m$^2$/g mit Palladium imprägniert. Hierzu wurde das Cerdioxid mit einer wäßrigen Lösung von Teraamminpalladium(II)-nitrat unter ständigem Rühren in Kontakt gebracht, so daß ein feuchtes Pulver entstand. Nach zweistündiger Trocknung bei 120°C in Luft wurde das entstandene Pulver für 2h bei 300°C in Luft kalziniert. Das so hergestellte Pd-Ceroxid-Pulver enthielt, bezogen auf sein Gesamtgewicht 1,47 Gew.-% Palladium. Aus dem vorgefertigten Pd/CeO$_2$-Pulver wurde eine wäßrige Beschichtungsdispersion mit 40 %-igem Feststoffanteil angesetzt. Zu dieser wurden folgende Zeolithpulver im Verhältnis 1:1:1:1:1 zugegeben: DAY (x = 200); Na-ZSM5 (x > 1000); H-ZSM5 (x = 120) ; H-ZSM5 (x = 40); H-Mordenit (x = 20). Anschließend wurde ein Wabenkörper durch Eintauchen in die Beschichtungsdispersion mit einer Menge von 180 Oxiden pro Liter Wabenkörpervolumen beschichtet. Die Beschichtung wurde bei 120°C an Luft getrocknet und abschließend für 2h bei 500°C kalziniert. Der fertige Katalysator enthielt pro Liter Katalysatovolumen 1,77 g Palladium.

**Beispiel B1**

Für den erfindungsgemäßen Katalysator wurde ein Aluminiumsilikat mit 5 Gew.-% Siliziumdioxid (spez. Oberfläche 286 m$^2$/g; siehe Tabelle 1) mit Platin aktiviert. Hierzu wurde das Aluminiumsilikat mit einer wäßrigen Lösung von Tetraamminplatin(II)-hydroxid unter ständigem Rühren in Kontakt gebracht, so daß ein feuchtes Pulver entstand. Nach zweistündiger Trocknung bei 120°C in Luft wurde das entstandene Pulver für 2h bei 300°C in Luft kalziniert. Anschließend erfolgte die Reduktion im Formiergasstrom ( 95 Vol.-% N$_2$ und 5 Vol.-% H$_2$) bei 500°C für die Dauer von 2h. Das so hergestellte Pt-Aluminiumsilikatpulver enthielt bezogen auf sein Gesamtgewicht 1,47 Gew.-% Platin.

Aus dem vorgefertigten Pt-Aluminiumsilikatpulver wurde eine wäßrige Beschichtungsdispersion mit 40 %-igem Feststoffanteil angesetzt. Zu dieser wurden folgende Zeolithpulver im Verhältnis 1:1:1:1:1 zugegeben: DAY (x = 200); Na-ZSM5 (x > 1000); H-ZSM5 (x = 120); H-ZSM5 (x = 40); H-Mordenit (x = 20).

Die genaue Zusammensetzung der Beschichtungsdispersion zeigt Tabelle 3.

Tabelle 3

| Zusammensetzung der Beschichtungsdispersion | | |
|---|---|---|
| Rohstoff | | Zusammensetzung [Gew.-%] |
| Pt-Aluminiumsilikat | | 67 |
| H-Mordenit | (x = 20) | 6,6 |
| H-ZSM5 | (x = 40) | 6,6 |
| H-ZSM5 | (x = 120) | 6,6 |
| DAY | (x = 200) | 6,6 |
| Na-ZSM5 | (x >1000) | 6,6 |

Als Katalysatorträger wurde ein wabenförmiger, offenzelliger Wabenkörper aus Cordierit mit 2,5 cm Durchmesser, 7,6 cm Länge, 62 Zellen beziehungsweise Strömungskanälen pro cm$^2$ und einer Wandstärke der Strömungskanäle von 0,2 mm verwendet. Dieser Wabenkörper wurde durch Eintauchen in die Beschichtungsdispersion mit einer Menge von 180 Oxiden pro Liter Wabenkörpervolumen beschichtet. Die Beschichtung wurde bei 120°C an Luft getrocknet und abschließend für 2h bei 500°C kalziniert. Der fertige Katalysator enthielt pro Liter Katalysatorvolumen 1,77 g Platin.

Die Zusammensetzung dieses Katalysators und aller Katalysatoren der folgenden Beispiele sind in der Tabelle 4 aufgelistet.

**Beispiel B2**

Es wurde ein weiterer Katalysator nach Beispiel 1 angefertigt. Statt der Zeolithmischung wurde nur der DAY-Zeolith (x = 200) in einer Menge von 33 Gew.-% bezogen auf das Gesamtgewicht der Katalysatormischung eingesetzt.

**Beispiel B3**

Es wurde ein weiterer Katalysator nach Beispiel 1 angefertigt. Statt der Zeolithmischung wurde nur Na-ZSM5 (x > 1000) in einer Menge von 33 Gew.-% bezogen auf das Gesamtgewicht der Katalysatormischung eingesetzt.

**Beispiel B4**

Es wurde ein weiterer Katalysator nach Beispiel 1 angefertigt. Statt der Zeolithmischung wurde nur H-ZSM5 (x = 120) in einer Menge von 33 Gew.-% bezogen auf das Gesamtgewicht der Katalysatormischung eingesetzt.

**Beispiel B5**

Es wurde ein weiterer Katalysator nach Beispiel 1 angefertigt. Statt der Zeolithmischung wurde nur H-ZSM5 (x = 40) in einer Menge von 33 Gew.-% bezogen auf das Gesamtgewicht der Katalysatormischung eingesetzt.

**Beispiel B6**

Es wurde ein weiterer Katalysator nach Beispiel 1 angefertigt. Statt der Zeolithmischung wurde nur Mordenit (x = 20) in einer Menge von 33 Gew.-% bezogen auf das Gesamtgewicht der Katalysatormischung eingesetzt.

**Beispiel B7**

Es wurde ein weiterer Katalysator nach Beispiel 5 angefertigt. Statt eines einzelnen Zeolithen wurde eine Zeolithmischung aus H-ZSM5 (x = 40) und H-ZSM5 (x = 120) im Verhältnis 1 : 1 eingesetzt. Die Zeolithmenge betrug 33 Gew.-% bezogen auf das Gesamtgewicht der Katalysatormischung.

### Beispiel B8

Es wurde ein weiterer Katalysator nach Beispiel 5 angefertigt. Statt eines einzelnen Zeolithen wurde eine Zeolithmischung aus H-ZSM5 (x = 40, H-ZSM5 (x = 120) und Na-ZSM5 (x > 1000) im Verhältnis 1 : 1 : 1 eingesetzt. Die Zeolithmenge betrug 33 Gew.-% bezogen auf das Gesamtgewicht der Katalysatormischung.

### Beispiel B9

Es wurde ein weiterer Katalysator analog zu Beispiel 1 jedoch mit einem Gewichtsverhältnis Pt-Aluminiumsilikat/Zeolithgemisch von 1 : 2. Um im fertigen Katalysator auf dieselbe Platinkonzentration wie in Beispiel 1 zu kommen, wurde das Aluminiumsilikat mit 2,94 Gew.-% Platin belegt. Die genaue Zusammensetzung des Katalysators kann der Tabelle 4 entnommen werden.

### Beispiel B10

Es wurde ein weiterer Katalysator analog zu Beispiel 7 jedoch mit einem Gewichtsverhältnis Pt-Aluminiumsilikat/Zeolithmischung von 5 : 1 angefertigt.

### Beispiel B11 - 16

Es wurden 6 Katalysatoren nach Beispiel 1 mit unterschiedlichen Platinkonzentrationen angefertigt. Hierzu wurden Pt-Aluminiumsilikatpulver mit Platingehalten von 2,06, 1,17, 0,59, 0,29, 0,15 und 0,06 Gew.-% hergestellt.

### Beispiel 17

Ein Katalysator nach Beispiel 13 mit 0,18 g Pt/l Wabenkörper wurde auf 30 % seiner Länge zusätzlich mit der Beschichtungsdispersion für den Katalysator von Beispiel 9 beschichtet. Die zusätzliche Beschichtung hatte eine Konzentration von 39 g/l Wabenkörpervolumen. Der fertige Katalysator enthielt 209 g Oxide pro Liter Wabenkörper und wies eine Konzentration von 0,72 g Pt/l auf.

### Beispiel B18

Die zusätzliche Beschichtung des Katalysators von Beispiel 15 wurde von jeder Stirnfläche des Wabenkörpers ausgehend auf jeweils 15 % der Länge des Wabenkörpers aufgebracht.

### Beispiel B19

Es wurde ein Katalysator nach Beispiel 10 mit 1,41 g Pt/l Wabenkörper jedoch nur mit 60 g/dm$^3$ Aluminium-silikat angefertigt. Für diesen Katalysator wurde deshalb ein Pt-Aluminiumsilikat mit einem Platingehalt von 2,34 Gew.-% (doppelter Pt-Gehalt gegenüber Beispiel 10) hergestellt.

### Beispiel B20

Es wurde ein Katalysator mit 140 g/l Pt-Aluminiumsilikat und 100 g/l Zeolithmischung angefertigt. Der Platingehalt des Pt-Aluminiumsilikats betrug 1,0 Gew.-%. Der fertige Katalysator enthielt 1,41 g Pt/l.

### Beispiel B21

Es wurde ein Katalysator nach Beispiel 10 hergestellt. Für die Aktivierung des Aluminiumsilikats wurde eine wäßrige Lösung aus Hexachloroplatinsäure verwendet.

### Beispiel B22

Es wurde ein Katalysator nach Beispiel 10 hergestellt. Für die Aktivierung des Aluminiumsilikats wurde eine wäßrige Lösung aus Platin(II)-nitrat verwendet.

**Beispiel B23**

Es wurde ein Katalysator nach Beispiel 9 hergestellt. Für die Aktivierung des Aluminiumsilikats wurde Palladium, eingebracht durch eine wäßrige Lösung aus Palladium(II)-nitrat, verwendet.

**Beispiel B24**

Es wurde ein Katalysator nach Beispiel 1 hergestellt. Für die Aktivierung des Aluminiumsilikats wurde eine Mischung von Platin und Rhodium im Verhältnis 5:1 verwendet. Als Platinvorstufe wurde Hexachloroplatinsäure und als Rhodiumvorstufe Rhodium(III)chlorid eingesetzt.

**Beispiel B25**

Es wurde ein Katalysator nach Beispiel 1 hergestellt. Für die Aktivierung des Aluminiumsilikats wurde eine Mischung von Platin, Palladium und Rhodium im Verhältnis 10:1:3 verwendet. Als Platinvorstufe wurde Tetraamminplatin (II) - hydroxid, als Palladiumvorstufe Palladium(II)-nitrat und als Rhodiumvorstufe Rhodium(II)-nitrat eingesetzt.

**Beispiel B26**

Es wurde ein Katalysator nach Beispiel 10 hergestellt. Für die Aktivierung des Aluminiumsilikats wurde eine wässrige Lösung aus Methylethanolamin-Platin(II)-hydroxid eingesetzt.

**Beispiel B27**

Es wurde ein Katalysator nach Beispiel 1 hergestellt. Abweichend von Beispiel 1 wurde das mit Platin aktivierte Aluminiumsilikat nicht im Formiergasstrom reduziert, sondern nur zwei Stunden lang an Luft bei 600°C calciniert.

**Beispiel B28**

Es wurde ein Katalysator nach Beispiel 1 hergestellt, jedoch wurde das Pt-Aluminiumsilikat nach der Imprägnierung nicht getrocknet und calciniert beziehungsweise reduziert, sondern sofort mit dem Zeolithgemisch vermischt und zur Beschichtungsdispersion verarbeitet. Hierzu wurde das Aluminiumsilikat in einer wäßrigen Lösung aus Platin (II)-nitrat dispergiert. Anschließend wurde der pH-Wert der Dispersion durch Zugabe einer wäßrigen, konzentrierten Ammoniaklösung auf einen Wert von 9 angehoben. Dann wurde die Zeolithmischung in die Dispersion eingerührt. Die fertige Dispersion wies einen Feststoffanteil von 40 Gew.-% auf.

**Beispiel B29**

Es wurde ein Katalysator nach Beispiel 28 hergestellt. Anstelle von Platin(II)-nitrat wurde eine wäßrige Lösung von Tetraamminplatin(II)-nitrat verwendet. Die pH-Wert Einstellung auf einen Wert von 2 erfolgte durch Zugabe einer gesättigten aliphatischen Monocarbonsäure.

**Beispiel B30**

Es wurde ein Katalysator nach Beispiel 17 hergestellt. Anstelle des keramischen Wabenkörpers aus Cordierit wurde ein ebenfalls offenzelliger, wabenförmiger Metallkörper mit einem Durchmesser von 2,5 cm, einer Länge von 7,5 cm sowie 62 Zellen beziehungsweise Strömungskanälen/cm$^2$ und einer Wandstärke der Strömungskanäle von 0,04 mm verwendet.

**Beispiel B31**

Es wurde ein Katalysator nach Beispiel 9 hergestellt. Anstelle das Aluminiumsilikates wurde ein γ-Aluminiumoxid mit einer spezifischen Oberfläche von 188 m$^2$/g eingesetzt.

**Beispiel B32**

Es wurde ein Katalysator nach Beispiel 9 hergestellt. Anstelle des Aluminiumsilikates wurde Titanoxid mit einer spezifischen Oberfläche von 95 m$^2$/g eingesetzt.

### Beispiel B33

Es wurde ein Katalysator nach Beispiel 1 mit folgenden Änderungen angefertigt. Es wurde das Aluminiumsilikat mit durch Kalzination auf 153 $m^2/g$ verringerter Oberfläche eingesetzt (siehe Tabelle 1). Dieses Material wurde wie in Beispiel 26 mit Methylethanolamin-Platin(II)-hydroxid imprägniert.
Als Zeolithmischung wurde ein Gemisch aus DAY und Na-ZSM5 gewählt. Das Gewichtsverhältnis zwischen Aluminiumsilikat und den Zeolithen wurde auf einen Wert von 6 : 1 eingestellt. Die Beschichtungsmenge pro Liter Wabenkörpervolumen betrug 140 g. Zusätzlich zu den in Beispiel 1 angegebenen Trocknungs-, Temper- und Reduktionseinstellungen wurde der Katalysator zum Abschluß für 2 h im Formiergasstrom bei 500°C reduziert. Der fertige Katalysator enthielt pro Liter Katalysatorvolumen 1,36 g Platin.

### Beispiel B34

Es wurde ein Katalysator nach Beispiel 33 hergestellt. Für die Aktivierung des Aluminiumsilikats wurde eine wäßrige Lösung aus Tetraamminplatin(II)-nitrat eingesetzt.

### Beispiel B35

Es wurde ein Katalysator nach Beispiel 34 hergestellt. Als Trägeroxid diente ein Aluminiumsilikat mit 5 Gew.-% Siliziumdioxid und einer spezifischen Oberfläche von 212 $m^2/g$ (siehe Tabelle 1).

### Beispiel B36

Es wurde ein Katalysator nach Beispiel 34 hergestellt. Als Trägeroxid diente ein Aluminiumsilikat mit 5 Gew.-% Siliziumdioxid und einer spezifischen Oberfläche von 320 $m^2/g$ (siehe Tabelle 1).

### Beispiel B37

Es wurde ein Katalysator nach Beispiel 36 hergestellt. Als Trägeroxid diente ein Aluminiumsilikat mit 10 Gew.-% Siliziumdioxid und einer spezifischen Oberfläche von 163 $m^2/g$ (siehe Tabelle 1).

**Tabelle 4**    Zusammensetzung der Katalysatoren

| Bei-spiel | Edelmetall | Edelmetall [g/dm³] | Edelmetall plus Al₂O₃-SiO₂ [g/dm³] | Edelmetall in Al₂O₃-SiO₂ [Gew.-%] | DAY x = 200 [g/dm³] | Na-ZSM5 x > 1000 [g/dm³] | H-ZSM5 x = 120 [g/dm³] | H-ZSM5 x = 40 [g/dm³] | H-Mordenit x = 20 [g/dm³] | Total [g/dm³] |
|---|---|---|---|---|---|---|---|---|---|---|
| V1 | Pt | 1,77 | 0 | 0 | 0 | 0 | 0 | 0 | 96 | 120 |
| V2 | Pt | 1,77 | 0 | 0 | 0 | 0 | 0 | 0 | 0 | 165 |
| V3 | Pt | 1,77 | 0 | 0 | 0 | 0 | 0 | 0 | 0 | 200 |
| V4 | Pd | 1,77 | 120*) | 1,47*) | 12 | 12 | 12 | 12 | 12 | 180 |
| B1 | Pt | 1,77 | 120 | 1,47 | 12 | 12 | 12 | 12 | 12 | 180 |
| B2 | Pt | 1,77 | 120 | 1,47 | 60 | 0 | 0 | 0 | 0 | 180 |
| B3 | Pt | 1,77 | 120 | 1,47 | 0 | 60 | 0 | 0 | 0 | 180 |
| B4 | Pt | 1,77 | 120 | 1,47 | 0 | 0 | 60 | 0 | 0 | 180 |
| B5 | Pt | 1,77 | 120 | 1,47 | 0 | 0 | 0 | 60 | 0 | 180 |
| B6 | Pt | 1,77 | 120 | 1,47 | 0 | 0 | 0 | 0 | 60 | 180 |
| B7 | Pt | 1,77 | 120 | 1,47 | 0 | 0 | 30 | 30 | 0 | 180 |
| B8 | Pt | 1,77 | 120 | 1,47 | 0 | 20 | 20 | 20 | 0 | 180 |
| B9 | Pt | 1,77 | 60 | 2,94 | 24 | 24 | 24 | 24 | 24 | 180 |
| B10 | Pt | 1,77 | 150 | 1,17 | 6 | 6 | 6 | 6 | 6 | 180 |
| B11 | Pt | 2,47 | 120 | 2,06 | 12 | 12 | 12 | 12 | 12 | 180 |
| B12 | Pt | 1,41 | 120 | 1,17 | 12 | 12 | 12 | 12 | 12 | 180 |
| B13 | Pt | 0,71 | 120 | 0,59 | 12 | 12 | 12 | 12 | 12 | 180 |
| B14 | Pt | 0,35 | 120 | 0,29 | 12 | 12 | 12 | 12 | 12 | 180 |
| B15 | Pt | 0,18 | 120 | 0,15 | 12 | 12 | 12 | 12 | 12 | 180 |
| B16 | Pt | 0,07 | 120 | 0,06 | 12 | 12 | 12 | 12 | 12 | 180 |
| B17 | Pt | 1) 0,18   2) 1,78 | 1) 120   2) 26 | 1) 0,15   2) 2,06 | 1) 12   2) 2,6 | 1) 12   2) 2,6 | 1) 12   2) 2,6 | 1) 12   2) 2,6 | 1) 12   2) 2,6 | 209 |

| Bei-spiel | Edelmetall | Edelmetall [g/dm³] | Edelmetall plus Al₂O₃-SiO₂ [g/dm³] | Edelmetall in Al₂O₃-SiO₂ [Gew.-%] | DAY x = 200 [g/dm³] | Na-ZSM5 x > 1000 [g/dm³] | H-ZSM5 x = 120 [g/dm³] | H-ZSM5 x = 40 [g/dm³] | H-Mordenit x = 20 [g/dm³] | Total [g/dm³] |
|---|---|---|---|---|---|---|---|---|---|---|
| B18 | Pt | 1) 0,18  2) 2,47 | 1) 120  2) 26 | 1) 0,15  2) 2,06 | 1) 12  2) 2,6 | 1) 12  2) 2,6 | 1) 12  2) 2,6 | 1) 12  2) 2,6 | 1) 12  2) 2,6 | 209 |
| B19 | Pt | 1,41 | 60 | 2,34 | 6 | 6 | 6 | 6 | 6 | 90 |
| B20 | Pt | 1,41 | 140 | 1,00 | 20 | 20 | 20 | 20 | 20 | 240 |
| B21 | Pt | 1,41 | 120 | 1,18 | 12 | 12 | 12 | 12 | 12 | 180 |
| B22 | Pt | 1,41 | 120 | 1,18 | 12 | 12 | 12 | 12 | 12 | 180 |
| B23 | Pd | 2,47 | 120 | 2,06 | 12 | 12 | 12 | 12 | 12 | 180 |
| B24 | Pt/Rh 5:1 | 1,77 | 120 | 1,47 | 12 | 12 | 12 | 12 | 12 | 180 |
| B25 | Pt/Rh/Pd 10:1:3 | 1,77 | 120 | 1,47 | 12 | 12 | 12 | 12 | 12 | 180 |
| B26 | Pt | 1,41 | 120 | 1,17 | 12 | 12 | | | | |
| B27 | Pt | 1,77 | 120 | 1,47 | 12 | 12 | 12 | 12 | 12 | 180 |
| B28 | Pt | 1,77 | 120 | 1,47 | 12 | 12 | 12 | 12 | 12 | 180 |
| B29 | Pt | 1,77 | 120 | 1,47 | 12 | 12 | 12 | 12 | 12 | 180 |
| B30 | Pt | 1,41 | 60 | 2,36 | 6 | 6 | 6 | 6 | 6 | 90 |
| B31 | Pt | 2,47 | 120 **) | 2,06 **) | 12 | 12 | 12 | 12 | 12 | 180 |
| B32 | Pt | 2,47 | 120 ***) | 2,06 ***) | 12 | 12 | 12 | 12 | 12 | 180 |
| B33 | Pt | 1,35 | 120 | 1,10 | 10 | 10 | 0 | 0 | 0 | 140 |
| B34 | Pt | 1,35 | 120 | 1,10 | 10 | 10 | 0 | 0 | 0 | 140 |
| B35 | Pt | 1,35 | 120 | 1,10 | 10 | 10 | 0 | 0 | 0 | 140 |
| B36 | Pt | 1,35 | 120 | 1,10 | 10 | 10 | 0 | 0 | 0 | 140 |
| B37 | Pt | 1,35 | 120 | 1,10 | 10 | 10 | 0 | 0 | 0 | 140 |

*) Pd-CeO₂    **) Pt-γ Al₂O₃    ***) Pt-TiO₂;    Al₂O₃-SiO₂= Aluminiumsilikat;    dm³ = Liter

EP 0 800 856 B1

## Anwendungsbeispiel

Die katalytische Aktivität der Abgasreinigungskatalysatoren der vorstehenden Beispiele wurde an einer Synthesegasanlage gemessen. Mit dieser Anlage ist es möglich, alle im realen Abgas eines Diesel- oder Otto-Motors vorhandenen gasförmigen Abgaskomponenten zu simulieren. Die gewählten Prüfbedingungen und die Modellgaszusammensetzung sind in Tabelle 5 aufgelistet. Als Kohlenwasserstoffkomponente wurde n-Hexadecan, Trivialname Cetan, welches als Bezugssubstanz für die Bestimmung der Zündwilligkeit von Dieselkraftstoffen bekannt ist, verwendet. Diese langkettige, aliphatische Verbindung findet sich auch zu erheblichen Anteilen im realen Dieselabgas wieder.

Zur Messung der im Abgas enthaltenen Gaskomponenten wurden die in Tabelle 6 angegebenen Meßgeräte verwendet.

An der Synthesgasanlage wurden die Umsetzungen von Kohlenmonoxid und Kohlenwasserstoffen im Dauerbetrieb bei Abgastemperaturen von 140 °C gemessen. Die Messungen wurden sowohl an den frischen als auch an den gealterten Katalysatoren vorgenommen (Ofenalterung: 16 h bei 750°C an Luft + 10 Vol.-% $H_2O$ + 25 ppm $SO_2$).

Zur Bestimmung der Anspringtemperaturen wurde das Abgas mit einer Aufheizrate von 15 °C/min erwärmt. Die Bestimmung der Konversion von Stickoxiden wurde bei einer Abgastemperatur von 200°C ermittelt.

Die Berechnung der Konversionsraten erfolgte mittels folgender Formel

$$X = \frac{N_E - N_A}{N_E} \cdot 100\%$$

X = Umsetzungsrate [%]

$N_E$ = Konzentration des Schadstoffes vor Katalysator [vppm]

$N_A$ = Konzentration des Schadstoffes nach Katalysator [vppm]

Die mit den Katalysatoren der Vergleichbeispiele und des Beispieles B1 erzielten Schadstoffumsetzungen sind in den Tabellen 7 und 8 aufgelistet. In Tabelle 7 handelt es sich um die Leistungsdaten der frischen Katalysatoren, während die Ergebnisse der Tabelle 8 mit Katalysatoren erhalten wurden, die einer Ofenalterung von 16 h bei 750 °C in Luft + 10 % Vol.-% $H_2O$ + 25 ppm $SO_2$ unterworfen worden waren.

Tabelle 5

| Prüfbedingungen und Modellgaszusammensetzung zur Bestimmung der Umsetzungsraten der Schadstoffe CO, HC, $NO_x$ und $SO_2$ in der Synthesegasanlage. ||
|---|---|
| Komponente | Konzentration |
| CO | 350 [vppm] |
| $H_2$ | 117 [vppm] |
| $C_{16}H_{34}$ | 90 [ppm$C_3$] |
| $SO_2$ | 25 [vppm] |
| NO | 270 [vppm] |
| $O_2$ | 6 [Vol.-%] |
| $H_2O$ | 10 [Vol.-%] |
| $CO_2$ | 10,7 [Vol.-%] |
| $N_2$ | Rest |
| Gasmenge | 1950 [Nl/h] |
| Katalysatorgröße | Ø 25 mm x 76 mm |
| Raumgeschwindigkeit | 50000 [h$^{-1}$] |
| Aufheizungsrate | 15 [°C/min] |

Tabelle 6

| Zusammenstellung der Meßgeräte zur Messung der Abgaskonzentration im Synthesegasteststand | | |
|---|---|---|
| Analysiertes Gas | Meßgerät | Hersteller |
| $O_2$ | Oxymat | Siemens AG |
| Kohlenwasserstoff | FID | Pierburg Meßtechnik |
| $NO_x$ | CLD 700 Elht | Zellweger ECO-Systeme |
| CO | Binos | Rosemount |
| $CO_2$ | Binos Binos | Rosemount Rosemount |
| $SO_2$ | | |

Tabelle 7

| Beispiel | $T_{50\%}$ [°C] | | Umsetzung bei 140°C [%] | | Umsetzung bei 200°C [%] |
|---|---|---|---|---|---|
| | CO | HC | CO | HC | NOx |
| V1 | 145 | 155 | 35 | 26 | 11 |
| V2 | 160 | 175 | 17 | 10 | 1 |
| V3 | 150 | 160 | 29 | 25 | 9 |
| V4 | 202 | <75 | 5 | 78 | 5 |
| B1 | 138 | <75 | 55 | 83 | 59 |
| B2 | 148 | <75 | 46 | 77 | 40 |
| B3 | 147 | <75 | 52 | 75 | 46 |
| B4 | 148 | <75 | 45 | 75 | 40 |
| B5 | 146 | <75 | 47 | 75 | 45 |
| B6 | 145 | <75 | 50 | 76 | 44 |
| B7 | 144 | <75 | 47 | 80 | 42 |
| B8 | 140 | <75 | 50 | 83 | 48 |
| B9 | 139 | <75 | 53 | 87 | 58 |
| B10 | 140 | <75 | 50 | 78 | 59 |
| B11 | 135 | <75 | 55 | 83 | 70 |
| B12 | 142 | <75 | 45 | 85 | 61 |
| B13 | 155 | <75 | 22 | 85 | 50 |
| B14 | 160 | <75 | 15 | 80 | 48 |
| B15 | 171 | <75 | 5 | 74 | 48 |
| B16 | 185 | <75 | 5 | 76 | 40 |
| B17 | 147 | <75 | 46 | 78 | 48 |
| B18 | 144 | <75 | 47 | 78 | 55 |
| B19 | 141 | <75 | 49 | 83 | 59 |
| B20 | 139 | <75 | 51 | 79 | 61 |
| B21 | 141 | <75 | 47 | 80 | 55 |
| B22 | 183 | <75 | 10 | 78 | 12 |

Schadstoffumsetzung durch die Katalysatoren der Beispiele B1-B32 und V1-V4 im Frischzustand

Tabelle 7 (fortgesetzt)

| Beispiel | T$_{50\%}$ [°C] | | Umsetzung bei 140°C [%] | | Umsetzung bei 200°C [%] |
|---|---|---|---|---|---|
| **Schadstoffumsetzung durch die Katalysatoren der Beispiele B1-B32 und V1-V4 im Frischzustand** | | | | | |
| | CO | HC | CO | HC | NOx |
| B23 | 175 | <75 | 25 | 85 | 18 |
| B24 | 145 | <75 | 45 | 83 | 51 |
| B25 | 149 | <75 | 45 | 79 | 45 |
| B26 | 144 | <75 | 47 | 86 | 59 |
| B27 | 141 | <75 | 70 | 81 | 75 |
| B28 | 141 | <75 | 69 | 80 | 73 |
| B29 | 137 | <75 | 69 | 80 | 73 |
| B30 | 141 | <75 | 59 | 82 | 70 |
| B31 | 137 | <75 | 49 | 78 | 55 |
| B32 | 139 | <75 | 51 | 81 | 59 |
| B33 | 133 | <75 | 98 | 80 | 40 |
| B34 | 137 | <75 | 90 | 80 | 38 |
| B35 | 138 | <75 | 83 | 79 | 41 |
| B36 | 141 | <75 | 65 | 78 | 37 |
| B37 | 135 | <75 | 94 | 81 | 37 |

Tabelle 8

| Beispiel | T$_{50\%}$ | | Umsetzung bei 140°C | | Umsetzung bei 200°C |
|---|---|---|---|---|---|
| **Schadstoffumsetzung durch Katalysatoren von ausgewählten Beispielen nach Ofenalterung (16h, 750°C, Luft + 10 vol.-% H$_2$O + 25 ppm SO$_2$)** | | | | | |
| | [°C] | | [%] | | [%] |
| | CO | HC | CO | HC | NOx |
| V1 | 199 | 215 | 9 | 3 | 1 |
| V2 | 209 | 235 | 5 | 2 | 0 |
| V3 | 190 | 199 | 8 | 8 | 5 |
| V4 | 222 | <75 | 1 | 76 | 1 |
| B1 | 175 | <75 | 18 | 75 | 53 |
| B2 | 180 | <75 | 13 | 7 | 8 |
| B3 | 188 | <75 | 12 | 70 | 29 |
| B4 | 187 | <75 | 11 | 71 | 26 |
| B5 | 186 | <75 | 13 | 69 | 31 |
| B6 | 186 | <75 | 12 | 71 | 30 |
| B7 | 180 | <75 | 14 | 70 | 31 |
| B8 | 177 | <75 | 16 | 75 | 40 |
| B32 | 185 | <75 | 11 | 74 | 41 |

Tabelle 8   (fortgesetzt)

| Schadstoffumsetzung durch Katalysatoren von ausgewählten Beispielen nach Ofenalterung (16h, 750°C, Luft + 10 vol.-% $H_2O$ + 25 ppm $SO_2$) | | | | | |
|---|---|---|---|---|---|
| **Beispiel** | **$T_{50\%}$** | | **Umsetzung bei 140°C** | | **Umsetzung bei 200°C** |
| | **[°C]** | | **[%]** | | **[%]** |
| | **CO** | **HC** | **CO** | **HC** | **NOx** |
| B33 | 174 | <75 | 21 | 76 | 35 |

**Patentansprüche**

1.  Katalysator zur Reinigung der Abgase von Dieselmotoren bestehend aus einem oder mehreren Zeolithen sowie zusätzlich einem oder mehreren Metalloxiden und mindestens einem Platingruppenmetall, **dadurch gekennzeichnet,** **daß** die Zeolithe in der $Na^+$- oder $H^+$-Form vorliegen und mit den zusätzlichen Metalloxiden im Katalysator vermischt sind und daß die zusätzlichen Metalloxide ausgewählt sind aus der Gruppe Aluminiumsilikat, Aluminiumoxid und Titanoxid, wobei das Aluminiumsilikat ein Gewichtsverhältnis Siliziumdioxid/Aluminiumoxid von 0,005 bis 1 aufweist und die Platingruppenmetalle nur auf diesen zusätzlichen Metalloxiden abgeschieden sind.

2.  Katalysator nach Anspruch 1, **dadurch gekennzeichnet,** **daß** das Zeolithgemisch aus bis zu fünf Zeolithen mit unterschiedlichen Modulen besteht.

3.  Katalysator nach Anspruch 2, **dadurch gekennzeichnet,** **daß** er eine Zeolithmischung aus mindestens zwei Zeolithen mit Modulen größer als 10 enthält, von denen einer einen Modul kleiner als 50 und der zweite einen Modul größer als 200 aufweist.

4.  Katalysator nach Anspruch 3, **dadurch gekennzeichnet,** **daß** das Gewichtsverhältnis der zusätzlichen Metalloxide inklusive der Platingruppenmetalle zu dem Zeolithgemisch 10 : 1 bis 1 : 3, bevorzugt 6 : 1 bis 2 : 1, beträgt.

5.  Katalysator nach Anspruch 1, **dadurch gekennzeichnet,** **daß** er ein mit Platin aktiviertes Aluminiumsilikat und eine Zeolithmischung aus einem dealuminierten Y-Zeolithen und einem Na-ZSM5-Zeolithen mit Modulen größer als 120 enthält, wobei das Aluminiumsilikat eine spezifische Oberfläche zwischen 100 und 200 $m^2$/g aufweist, welche mit 0,05 bis 0,2 mg Pt/$m^2$ belegt ist.

6.  Katalysator nach Anspruch 5, **dadurch gekennzeichnet,** **daß** das Gewichtsverhältnis des Aluminiumsilikats zur Zeolithmischung im Bereich zwischen 6 : 1 bis 2 : 1 liegt.

7.  Katalysator nach einem der vorstehenden Ansprüche, **dadurch gekennzeichnet,** **daß** er in Form einer Beschichtung auf den Innenwandungen eines Wabenkörpers in einer Konzentration von 50 bis 400 g/l Wabenkörpervolumen aufgebracht ist.

8.  Katalysator nach einem der vorstehenden Ansprüche, **dadurch gekennzeichnet,** **daß** die Platingruppenmetalle in einer Konzentration von 0,01 bis 5 g/l Wabenkörpervolumen vorliegen.

9.  Verwendung des Katalysators nach einem der vorstehenden Ansprüche für die Reinigung der Abgase von Dieselmotoren.

**Claims**

1. A catalyst for the purification of diesel engine exhaust gases, said catalyst consisting of one or more zeolites as well as in addition one or more metal oxides and at least one metal of the platinum group, **characterized in that** said zeolites are present in Na$^+$ or H$^+$ form and are mixed with said additional metal oxides in the catalyst, and **in that** said additional metal oxides are selected from the group consisting of aluminium silicate, alumina and titania, wherein said aluminium silicate has a weight ratio of silicium dioxide/aluminium oxide of from 0.005 to 1 and said metals of the platinum group are deposited on these additional metal oxides only.

2. The catalyst according to claim 1, **characterized in that** said zeolite mixture consists of up to five zeolites having different moduli.

3. The catalyst according to claim 2, **characterized in that** it contains a zeolite mixture of at least two zeolites having moduli greater than 10, one of which has a modulus lower than 50 and the other having a modulus greater than 200.

4. The catalyst according to claim 3, **characterized in that** the weight ratio of said additional metal oxides including said metals of the platinum group to said zeolite mixture is from 10:1 to 1:3, preferably from 6:1 to 2:1.

5. The catalyst according to claim 1, **characterized in that** it contains a platinum-activated aluminium silicate and a zeolite mixture of a dealuminated Y-zeolite and a Na-ZSM5-zeolite having moduli greater than 120, wherein said aluminium silicate has a specific surface area between 100 and 200 m$^2$/g which is covered by 0.05 to 0.2 mg Pt/m$^2$.

6. The catalyst according to claim 5, **characterized in that** the weight ratio of aluminium silicate to said zeolite mixture is within the range of from 6:1 to 2:1.

7. The catalyst according to one of the preceding claims, **characterized in that** it is applied onto the inner walls of a honeycomb carrier in the form of a coating having a concentration of from 50 to 400 g/l honeycomb carrier volume.

8. The catalyst according to one of the preceding claims, **characterized in that** said metals of the platinum group are present in a concentration of from 0.01 to 5 g/l honeycomb carrier volume.

9. Use of the catalyst according to one of the preceding claims for the purification of diesel engine exhaust gases.

**Revendications**

1. Catalyseur pour nettoyer les gaz d'échappement de moteurs Diesel composé d'un ou plusieurs zéolithes ainsi qu'en plus d'un ou plusieurs oxydes métalliques et d'au moins un métal du groupe du platine, **caractérisé en ce que** les zéolithes se présentent sous la forme Na$^+$ ou H$^+$ et sont mélangées à des oxydes métalliques supplémentaires dans le catalyseur, et les oxydes métalliques supplémentaires sont choisis dans les groupes comprenant le silicate d'aluminium, l'oxyde d'aluminium et l'oxyde de titane, le silicate d'aluminium étant dans un rapport pondéral dioxyde de silicium/oxyde d'aluminium de 0,005 à 1 et les métaux du groupe du platine n'étant déposés que sur ces oxydes métalliques supplémentaires.

2. Catalyseur selon la revendication 1, **caractérisé en ce que** le mélange de zéolithes comprend jusqu'à cinq zéolithes avec des modules différents.

3. Catalyseur selon la revendication 2, **caractérisé en ce qu'**il se compose d'un mélange de zéolithes d'au moins deux zéolithes ayant des modules supérieurs à 10, dont l'un a un module inférieur à 50, et l'autre un module supérieur à 200.

4. Catalyseur selon la revendication 3, caractêrisé en ce que le rapport pondéral des oxydes métalliques supplémentaires y compris des métaux du groupe du platine par rapport au mélange de zéolithes est de 10 : 1 jusqu'à 1 : 3, de préférence entre 6 : 1 et 2 : 1.

5. Catalyseur selon la revendication 1,
   **caractérisé en ce qu'**
   il contient un silicate d'aluminium activé par du platine et un mélange de zéolithes formé de zéolithes Y désalumisées et d'une zéolithe Na-ZSM5 avec des modules supérieurs à 120, le silicate d'aluminium ayant une surface spécifique comprise entre 100 et 200 $m^2$/g occupée par 0,05 à 0,2 mg Pt/$m^2$.

6. Catalyseur selon la revendication 5,
   **caractérisé en ce que**
   le rapport pondéral du silicate d'aluminium au mélange de zéolithes se situe entre 6 ; 1 et 2 : 1.

7. Catalyseur selon l'une quelconque des revendications précédentes,
   **caractérisé en ce qu'**
   il est appliqué sous la forme d'un revêtement sur les parois intérieures d'un corps alvéolaire avec une concentration de 50 à 400 g/l du volume du corps alvéolaire.

8. Catalyseur selon l'une quelconque des rcvendications précédentes,
   **caractérisé en ce que**
   les métaux du groupe du platine sont dans une concentration de 0,01 à 5 g/l du volume du corps alvéolaire.

9. Application du catalyseur selon l'une quelconque des revendications précédentes, pour le nettoyage des gaz d'échappement de moteurs Diesel.